# EUROPEAN PATENT SPECIFICATION

(11) **EP 2 407 287 B1**
(45) Date of publication and mention of the grant of the patent: **22.01.2014**
(21) Application number: 11397518.9
(22) Date of filing: 08.07.2011
(51) Int. Cl.: B27L 7/00, B07B 1/10, B07B 13/16, B07B 13/05

(54) **Conveyor for a wood splitting device**
Förderer für eine Holzspaltevorrichtung
Transporteur pour un dispositif à fendre le bois

(30) Priority: 13.07.2010 FI 20105801
(43) Date of publication of application: 18.01.2012
(73) Proprietor: Maaselän Kone Oy, 85800 Haapajärvi (FI)
(72) Inventor: Autio, Juha, 85800 Haapajärvi (FI); Lauhikari, Pekka, 84100 Ylivieska (FI)
(74) Representative: Tampereen Patenttitoimisto Oy

(56) References cited:
- WO-A1-96/22176
- FR-A1- 2 533 462
- FR-A1- 2 796 327
- GB-A- 2 091 197
- JP-A- 2006 214 179
- US-A- 3 974 867
- US-A- 4 076 061
- US-A- 4 269 242
- US-A- 4 284 112
- US-A- 4 609 018
- US-A- 4 936 362
- US-A- 5 022 445
- US-A- 5 884 545
- US-A1- 2005 173 858

## Description

The invention relates to a conveyor intended for transferring wood pieces chopped with a wood chopping device as per the preamble of claim 1. Such a conveyor is disclosed by FR 2 796 327.

In mechanical wood chopping devices or wood chopping machines, wood pieces to be split are thrust in their longitudinal direction against a splitting blade by an actuator. With such wood chopping devices, the wood processing capacity can be increased significantly compared with manual work, when making, for example, firewood. Modern wood chopping devices normally comprise a saw for cutting long pieces of wood shorter, the cut wood pieces being thrust against a splitting blade by a splitting head moving back and forth. The splitting head is moved back and forth by one or more actuators so that when moving backwards, it leaves an open splitting space, into which a new piece of wood to be processed, cut to a suitable length, can drop off the saw, after which the splitting head can thrust the wood piece against the splitting blade. To implement the splitting cycle and to control the actuators, several inventions have been developed, one example being the European patent EP-1712336.

To prevent the accumulation of the cut wood pieces in the area downstream of the splitting edge, where they present an obstacle and may block the operation of the splitting edge, wood chopping devices normally comprise a discharge conveyor which is an endless belt or chain conveyor for transferring the wood pieces farther away and dropping them into an intermediate storage at the other end of the conveyor.

Up until now, the focus has primarily been on developing the initial end of the wood chopping devices, that is, the sawing and chopping functions and the control systems for these.

The pieces of wood processed in the wood chopping device may vary to a great extent, and the wood itself is very irregular, "heterogeneous" material including bark, wood material, knags, etc. Because of these factors, smaller pieces are always produced during the splitting, such as sticks, pieces of bark, and other litter that is not wanted in the finished product. The by-product from such a splitting process is gradually accumulated in the area downstream of the splitting blade. Downstream of the splitting blade, there is normally a grate, onto which the split wood pieces fall before they are transferred to the discharge conveyor. Because of the litter falling through this grate, the base of the machine may be filled with litter after working for only one or two hours. Another way to reduce littering, used primarily in larger machines, is to acquire a separate cleansing drum functioning as a sieve, which is placed downstream of the discharge conveyor and is used as a separator to separate litter from the finished chopped wood. This is a supplementary apparatus to be acquired and installed separately by the user of the wood chopping device.

In addition to a vertical edge, the splitting blade of the wood chopping device normally also comprises edges in other positions, such as a horizontal edge and/or inclined edges, wherein wood pieces can be split in more than two parts. In this way, firewood pieces of suitable size can be made by cutting and splitting of trunks with even a large diameter. The position of such a splitting blade in the vertical direction can be adjusted by the machine operator so that the blade edges can always be brought to a suitable position with respect to the diameter of the wood piece to be split. The splitting head thrusts the wood piece to be split as far as possible along the blade, but it cannot bring split pieces all the way through the blade. As a result, the split wood pieces remain, at their rear end, stuck to the blade, from which the next wood piece to be split pushes them all the way onto the grate. The wood pieces accumulating onto the grate are gradually moved on to the discharge conveyor, primarily forced by new wood pieces coming from behind. When the area around and downstream of the blade is filled with split wood pieces, the adjustment of the height position of the blade is not possible during continuous working, but at least the wood pieces stuck to the blade have to be removed first.

It is an aim of the invention to present a conveyor that can be used for conveying wood pieces chopped by the wood chopping device, irrespective of whether the conveyor is "on-line" in the wood chopping device or whether it is used "off-line" for processing wood pieces made earlier with the wood chopping device. To achieve this aim, the conveyor has the features of of the appended claim 1. Such a conveyor can be used, for example, for conveying previously chopped but uncleaned wood pieces in a controlled manner to a given place, for example an intermediate storage, wherein the litter can simultaneously be cleaned off them.

In the following, the invention will be described in more detail with reference to the appended drawings, in which
- Fig. 1: shows schematically the travel of wood pieces and litter in a wood chopping device according to the invention,
- Fig. 2: shows a first embodiment of the device,
- Fig. 3: shows a more detailed view of the embodiment of Fig. 2,
- Fig. 4: shows an embodiment not according to the invention, and
- Figs. 5: shows schematically the placement of the guide according to the first embodiment.

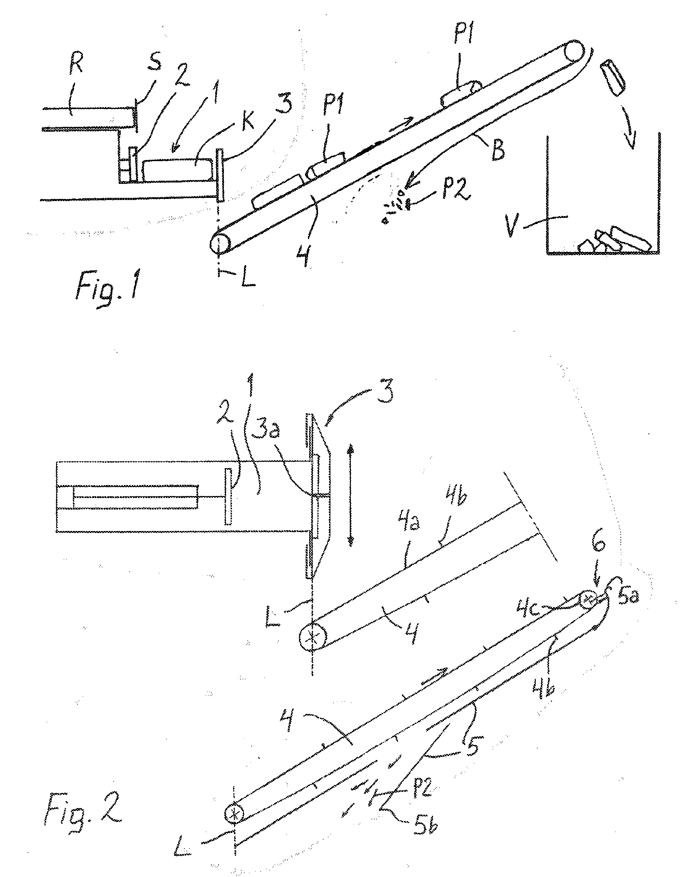

Figure 1 shows the principle of a wood chopping device in a schematic view. Longer tree trunks R are first cut into shorter wood pieces by a saw S or a corresponding cross-cutting device, from which they fall into a splitting space 1 with a splitting head 2 moving back and forth and thrusting the wood pieces K against a splitting blade 3. Downstream of a splitting line L defined by the splitting blade 3, the finished chopped wood pieces P1 and litter P2 produced by the splitting fall onto a conveyor 4 underneath the splitting blade 3, the solid conveyor surface moving both the finished wood pieces P1 and the litter P2 towards the discharge point at the other end of the conveyor 4. The conveyor extends diagonally upwards in the transport direction so that the discharge point of the chopped wood pieces P1 is higher than the point where the conveyor takes the wood pieces along with it. The wood pieces P1 are transported up to the discharge point, where they fall into an intermediate storage V, from where they will be moved away for further processing. The litter P2, in turn, is collected into the area between the splitting blade and the discharge point, underneath the conveyor, by being conveyed together with the wood pieces P1 by the conveyor all the way to the discharge point, from which they are moved by a guide backwards in the return direction of the conveyor (arrow B). The conveyor structure comprises a gap at the discharge point of the conveyor, between the end of the conveyor and the end of the guide. The large chopped wood pieces P1 are easily transferred across such a gap, whereas the litter P2 coming with them will fall through the gap.

Figure 2 shows a first embodiment of the device. The conveyor is a belt conveyor formed by an endless loop, whose material carrying section is directed away from the splitting blade, diagonally upwards to the discharge point. A pulley at the initial end of the conveyor loop is directly underneath the splitting line L, but it can also be extended to the other side of the splitting line L. The carrying surface 4a of the conveyor 4 is a solid conveyor mat; in other words, it is closed in such a way that it is impermeable to litter. The conveyor is a so-called scraper conveyor; that is, the conveyor comprises scrapers 4b fixed to its surface to secure the transportation of the wood pieces P1. A guide 5 is placed underneath the return section of the loop of the conveyor and is fixed to the frame of the conveyor 4. The first end 5a of the guide 5 is brought to a given distance from the pulley 4c of the conveyor 4, and its second end is placed underneath the return section of the conveyor, at a given distance from the wood discharge point in the return direction. In this way, a transverse gap 6 is formed, through which the litter P2 can come off the conveyor and move downwards along the sloping guide to the other edge 5b of the guide, where it falls off. In Fig. 2, this second edge 5b is the lower edge of an auxiliary guide placed underneath the actual guide plate, via which edge the litter falls into the desired location, but the guide 5 may also be a solid guide plate whose lower edge defines the location for collecting litter.

Figure 2 only shows the belt that forms the loop of the conveyor, that is, the mat and the scrapers, the pulleys of the loop, as well as the guide for litter. The conveyor also comprises borders which are provided on both sides and which may also extend to the sides of the guide 5 in such a way that this guide is, in a way, encapsulated.

In Fig. 2, arrows are used to illustrate the possibility of adjusting the splitting blade 3 in the vertical direction. Because the initial end of the conveyor 4 is at a distance from the splitting blade, underneath the same, the position of the splitting blade can be easily adjusted in the height direction in such a way that the horizontal edge 3a in the blade, and/or the edges diagonal to the vertical edge therein, can be brought to a suitable height with respect to the wood pieces K in the splitting space 1.

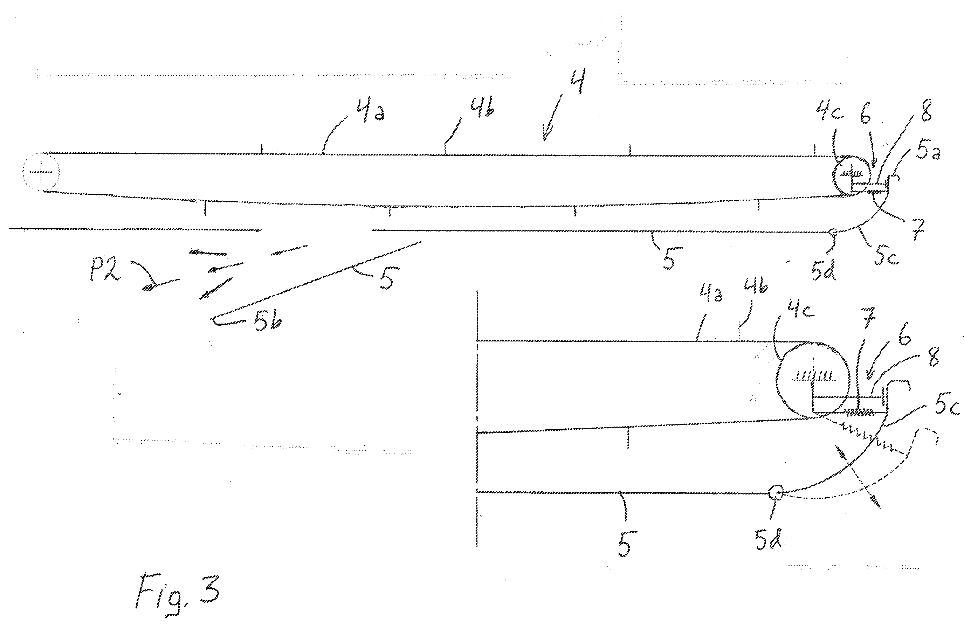

Figure 3 shows the conveyor of Fig. 2 in more detail and placed horizontally from the upwards slanted position of Fig. 2. An overload protection 7 is placed between the guide 5 and the frame of the conveyor 4, allowing the articulated section 5c of the guide 5, ending in the gap 6, to bend farther away from the pulley 4c of the conveyor 4. This is provided in case the chopped wood piece P1, because of its size or position, is accidentally pushed into the gap 6, whereby said wood piece can, thanks to the expansion of the gap, enter the space between the guide 5 and the return section of the conveyor 4, which is dimensioned so that the scrapers 4b and also wood pieces have enough space to pass through it. The overload protection is flexible in such a way that it can, after the wood piece has moved backwards, return to its normal position, in which it is held by a stopper 8 effective against the return direction of the overload protection. So that the wood piece would have sufficient space in the guide, the distance between the articulated section 5c of the guide and the conveyor is gradually expanding from the gap 6 all the way to a hinge 5d that forms a pivot. In practice, the overload protection 7 can be implemented by an extension spring.

The scrapers 4b of the conveyor are also used as a conveyor for litter P2 downwards along the guide 5 in the return section of the conveyor loop.

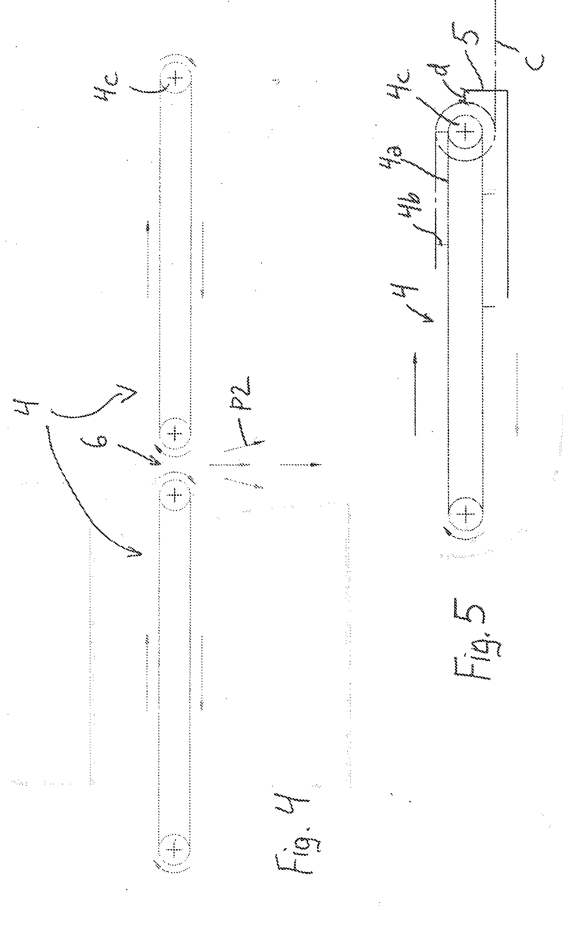

Figure 4 shows an embodiment not according to the invention, in which the litter P2 is not carried all the way to the discharge point of the conveyor. In this case, the conveyor 4 is shown in the horizontal position. The conveyor 4 comprises two partial conveyors which may be structurally scraper conveyors of the type shown in Fig. 3 (scrapers not shown). Between the first partial conveyor formed of an endless loop and the second partial conveyor formed of an endless loop, a transverse gap 6 is left, through which the litter P2 falls down, but across which the wood pieces P1 can be transferred from the first partial conveyor to the second partial conveyor. The gap is designed to have a suitable size between the pulley at the terminal end of the first partial conveyor and the pulley at the initial end of the second partial conveyor.

Because the litter is removed already in the middle of the conveyor with respect to the direction of transfer of the wood pieces P1, the surface of the second partial conveyor downstream of the litter removal point, or the gap, does not necessarily have to be solid, but in practice, the surface of both partial conveyors may be a solid mat, and each partial conveyor may be a scraper conveyor.

Figure 5 shows an advantageous way of placing the guide 5 at the discharge point of the conveyor. It has been found that at the terminal end of the conveyor 4, it does not suffice to provide a mere rectilinear guide plate placed under the return section of the loop of the conveyor and extending to the front of the pulley 4c and the scrapers 4b, but the front edge of this guide plate must bend upwards at least above the line C which is parallel to the straight line drawn by the upper edges of the scrapers 4 in the carrying section of the conveyor and is tangential to the curve drawn by the upper edges of the scrapers 4b at the pulley 4c on the side of the return section of the conveyor. It is advantageous that the front edge of the guide plate extends to some extent above said line C, being placed at a suitable minimum distance d of, for example, about 50 mm from the upper edges of the scrapers 4b. The front edge of the guide plate may extend, for example, to the plane that is parallel to said line C and extends through the central axis of the pulley 4c. In this context, the front edge refers to that edge of the guide plate which functionally delimits the gap 6, and as shown in Fig. 3, this edge may have been made by rounding the tip section of the plate.

The invention is not restricted solely to the embodiments shown in the drawings. In Fig. 1, the conveyor is provided with a downwards closed transfer surface by means of a solid surface of the conveyor 4 extending from a splitting blade up to the litter removal point, but alternatively, the initial point of the conveyor may also be placed at a distance from the blade, wherein the grate normally covering this distance can be replaced with a solid surface that does not let the litter fall immediately under the machine but the litter is carried with the chopped wood pieces along the surface to the conveyor 4. This closed surface can also be tilted in such a way that it is inclined from the blade towards the initial point of the conveyor 4, wherein the wood pieces can be removed from the blade more easily and it is possible to implement the above-described adjustment of the blade.

The conveyors presented in the above figures can belong to the standard equipment of the wood chopping device and can be connected to its frame in a removable manner, particularly between the working position and the transport position, but it may also be pivotable in the horizontal direction with respect to the frame, so that the position of the discharge end can be varied in the horizontal direction. In a wood chopping device, it is also possible to apply a conveyor that is installed separately downstream of the splitting blade and is similar to the conveyor shown in the figures above and can be placed, for example, in the position shown in Fig. 1 with respect to the splitting blade.

However, the conveyor can also be applied in a separate process of transporting wood pieces, wherein it is used for the processing of previously chopped wood pieces containing litter. The conveyor can thus be structurally of any type shown in the figures 1-3 and 5, with the exception that it is not connected to the wood chopping device. The wood pieces originally made by the wood chopping device are fed to the initial end of the conveyor, and the conveyor may operate exactly in the same way as the conveyor connected to the wood chopping device and shown in the figures, for carrying the litter to a defined location farther away from the initial end of the conveyor.

## Claims

1. A conveyor (4) arranged to transfer chopped wood pieces (P1), wherein it comprises a feed end and a discharge end, and a transfer surface extending between the feed end and the discharge end and arranged to move the chopped wood pieces (P1) from the feed end to a discharge point at the discharge end, and which conveyor (4) is a scraper conveyor comprising a downwards closed transfer surface between the feed end and the discharge end of the conveyor (4), the conveyor (4) being provided with a litter separation point formed by a gap (6) that is transverse to the direction of transfer of the conveyor (4) and located at a distance from the feed end, across which separation point the conveyor is arranged to carry the chopped wood pieces (P1), wherein the separation point is arranged to direct the litter into the area between the feed end and the discharge point, and that the litter separation point is at the wood discharge point, **characterized in that** a guide (5) extends from the separation point backwards, against the direction of transfer of the conveyor, underneath the conveyor, arranged to direct the litter (P2) into an area between the feed end and the discharge point.

2. The conveyor according to claim 1, **characterized in that** a gap (6) used as the separation point is left between the front edge of the guide and a pulley (4c) of the conveyor (4).

3. The conveyor according to claim 1 or 2, **characterized in that** the guide (5) is integrated in the conveyor in such a way that it is fixed to the frame of the conveyor.

4. The conveyor according to claim 3, **characterized in that** the conveyor comprises borders on both sides which extend to the sides of the guide (5) so that the guide is encapsulated.

5. The conveyor according to claim 1, 2, 3 or 4, **characterized in that** an overload protection (7) is provided between the guide (5) and the frame of the conveyor (4), allowing a flexible movement of the guide at the separation point.

6. The conveyor according to any of the preceding claims, **characterized in that** the discharge point of the conveyor (4) is higher than the initial end of the conveyor (4), wherein the conveyor (4) extends diagonally upwards.

7. A wood chopping device comprising a splitting space (1) with a splitting head (2) moving back and forth and arranged to thrust wood pieces (K) fed into the splitting space against a splitting blade (3), wherein downstream of the splitting blade (3) the wood chopping device is provided with a conveyor (4) arranged to move chopped wood pieces (P1) from the splitting blade farther away to a discharge point at the discharge end of the conveyor (4), **characterized in that** the wood chopping device comprises a conveyor (4) according to any of claims 1-6.

## Patentansprüche

1. Fördereinrichtung (4), die dafür angeordnet ist, gespaltene Holzstücke (P1) zu befördern, wobei die Einrichtung ein Zufuhrende und ein Abgabeende sowie eine Transportfläche aufweist, die sich zwischen dem Zufuhrende und dem Abgabeende erstreckt und so angeordnet ist, dass sie die gespaltenen Holzstücke (P1) von dem Zufuhrende zu einem Abgabepunkt an dem Abgabeende bewegt, und wobei die Fördereinrichtung (4) ein Kratzbandförderer ist, der eine nach unten geschlossene Transportfläche zwischen dem Zufuhrende und dem Abgabeende der Fördereinrichtung (4) aufweist, wobei die Fördereinrichtung (4) mit einem Abfalltrennpunkt versehen ist, der von einem Spalt (6) gebildet ist, der quer zur Transportrichtung der Fördereinrichtung (4) liegt und sich in einem Abstand von dem Zufuhrende befindet, wobei die Fördereinrichtung über diesen Trennpunkt so angeordnet ist, dass er die gespaltenen Holzstücke (P1) befördert, wobei der Trennpunkt so angeordnet ist, dass er den Abfall in den Bereich zwischen dem Zufuhrende und dem Abgabepunkt leitet und dass sich der Abfalltrennpunkt an dem Holzabgabepunkt befindet, **dadurch gekennzeichnet, dass** sich eine Führung (5) von dem Trennpunkt unterhalb der Fördereinrichtung nach hinten gegen die Transportrichtung der Fördereinrichtung erstreckt, die so angeordnet ist, dass sie den Abfall (P2) in einen Bereich zwischen dem Zufuhrende und dem Abgabepunkt lenkt.

2. Fördereinrichtung nach Anspruch 1, **dadurch gekennzeichnet, dass** ein als der Trennpunkt verwendeter Spalt (6) zwischen der Vorderkante der Führung und einer Riemenscheibe (4c) der Fördereinrichtung (4) verbleibt.

3. Fördereinrichtung nach Anspruch 1 oder 2, **dadurch gekennzeichnet, dass** die Führung (5) derart in der Fördereinrichtung integriert ist, dass sie an dem Rahmen der Fördereinrichtung befestigt ist.

4. Fördereinrichtung nach Anspruch 3, **dadurch gekennzeichnet, dass** die Fördereinrichtung Ränder an beiden Seiten aufweist, die sich derart an den Seiten der Führung (5) erstrecken, dass die Führung eingekapselt ist.

5. Fördereinrichtung nach Anspruch 1, 2, 3 oder 4, **dadurch gekennzeichnet, dass** ein Überlastschutz (7) zwischen der Führung (5) und dem Rahmen der Fördereinrichtung (4) vorgesehen ist, der eine flexible Bewegung der Führung an dem Trennpunkt ermöglicht.

6. Fördereinrichtung nach einem der vorstehenden Ansprüche, **dadurch gekennzeichnet, dass** der Abgabepunkt der Fördereinrichtung (4) höher liegt als das vordere Ende (4) der Fördereinrichtung (4), wobei sich die Fördereinrichtung (4) diagonal nach oben erstreckt.

7. Holzspaltvorrichtung, aufweisend einen Spaltraum (1) mit einem sich vorwärts und rückwärts bewegenden Spaltkopf (2), der so angeordnet ist, dass er dem Spaltraum zugeführte Holzstücke (K) gegen eine Spaltklinge (3) schiebt, wobei die Holzspaltvorrichtung stromabwärts der Spaltklinge (3) mit einer Fördereinrichtung (4) versehen ist, die dafür angeordnet ist, gespaltene Holzstücke (P1) von der Spaltklinge weiter weg zu einem Abgabepunkt an dem Abgabeende der Fördereinrichtung (4) zu bewegen, **dadurch gekennzeichnet, dass** die Holzspaltvorrichtung eine Fördereinrichtung (4) nach einem der Ansprüche 1-6 aufweist.

## Revendications

1. Transporteur (4) agencé pour transférer des pièces bois fendues (P1), dans lequel il comprend une extrémité d'alimentation et une extrémité de décharge, et une surface de transfert s'étendant entre l'extrémité d'alimentation et l'extrémité de décharge et agencé de façon à déplacer les pièces bois fendues (P1) de l'extrémité d'alimentation jusqu'à un point de décharge au niveau de l'extrémité de décharge, et lequel transporteur (4) est un transporteur à raclettes comprenant une surface de transfert fermée vers le bas entre l'extrémité d'alimentation et l'extrémité de décharge du transporteur (4), le transporteur (4) étant prévu avec un point de séparation de déchets formé par un espace (6) qui est transversal au sens de transfert du transporteur (4) et situé à une certaine distance de l'extrémité d'alimentation, au travers duquel point de séparation le transporteur est agencé pour transporter les pièces bois fendues (P1), dans lequel le point de séparation est agencé de façon à diriger les déchets jusque dans la zone entre l'extrémité d'alimentation et le point de décharge, et le point de séparation de déchets est au niveau du point de décharge de bois, **caractérisé en ce qu'**un guide (5) s'étend à partir du point de séparation vers l'arrière, à l'inverse du sens de transfert du transporteur, en-dessous du transporteur, agencé pour diriger les déchets (P2) jusque dans une zone entre l'extrémité d'alimentation et le point de décharge.

2. Transporteur selon la revendication 1, **caractérisé en ce qu'**un espace (6) utilisé comme le point de séparation est laissé entre le bord avant du guide et une poulie (4c) du transporteur (4).

3. Transporteur selon la revendication 1 ou 2, **caractérisé en ce que** le guide (5) est intégré dans le transporteur de telle façon qu'il est fixé sur le châssis du transporteur.

4. Transporteur selon la revendication 3, **caractérisé en ce que** le transporteur comprend des rebords sur les deux côtés qui s'étendent jusqu'aux côtés du guide (5), de sorte que le guide est encapsulé.

5. Transporteur selon la revendication 1, 2, 3 ou 4, **caractérisé en ce qu'**une protection (7) contre une surcharge est prévue entre le guide (5) et le châssis du transporteur (4), permettant un mouvement flexible du guide au niveau du point de séparation.

6. Transporteur selon l'une quelconque des revendications précédentes, **caractérisé en ce que** le point de décharge du transporteur (4) est plus haut que l'extrémité initiale du transporteur (4), dans lequel le transporteur (4) s'étend diagonalement vers le haut.

7. Dispositif de fendage de bois comprenant un espace (1) de fendage avec une tête (2) de fendage se déplaçant en va-et-vient et agencée pour pousser des pièces de bois (K) alimentées dans l'espace de fendage contre une lame (3) de fendage, dans lequel, en aval de la lame (3) de fendage, le dispositif de fendage de bois est prévu avec un transporteur (4) agencé pour transférer des pièces bois fendues (P1) de la lame de fendage plus loin jusqu'à un point de décharge au niveau de l'extrémité de décharge du transporteur (4), **caractérisé en ce que** le dispositif de fendage de bois comprend un transporteur (4) selon l'une quelconque des revendications 1 à 6.
